# EUROPÄISCHE PATENTSCHRIFT

(11) **EP 2 936 469 B1**
(45) Veröffentlichungstag und Bekanntmachung des Hinweises auf die Patenterteilung: **06.11.2019**
(21) Anmeldenummer: 13814513.1
(22) Anmeldetag: 18.12.2013
(51) Int. Cl.: G08C 17/02

(54) **MOBILFUNKTELEFON ZUR FERNSTEUERUNG EINER FUNKTION EINER SICHERHEITSVORRICHTUNG EINES KRAFTFAHRZEUGS**
CELLULAR PHONE FOR REMOTELY CONTROLLING A FUNCTION OF A SECURITY DEVICE OF A MOTOR VEHICLE
TÉLÉPHONE MOBILE POUR LA COMMANDE À DISTANCE D'UNE FONCTION D'UN DISPOSITIF DE SÉCURITÉ D'UN VÉHICULE AUTOMOBILE

(30) Priorität: 20.12.2012 DE 102012112808
(43) Veröffentlichungstag der Anmeldung: 28.10.2015
(73) Patentinhaber: Huf Hülsbeck & Fürst GmbH & Co. KG, 42551 Velbert (DE)
(72) Erfinder: MÜLLER, Ulrich, 42549 Velbert (DE)
(74) Vertreter: Vogel, Andreas
(86) Internationale Anmeldenummer: PCT/EP2013/077126
(87) Internationale Veröffentlichungsnummer: WO 2014/096025

(56) Entgegenhaltungen:
- GB-A- 2 402 840
- GB-A- 2 480 685
- GB-A- 2 487 447
- US-A1- 2002 080 083

## Beschreibung

Die Erfindung betrifft ein Mobilfunktelefon zur Steuerung wenigstens einer Funktion einer Sicherheitsvorrichtung eines Kraftfahrzeugs gemäß dem Oberbegriff von Anspruch 1. Weiterhin betrifft die Erfindung ein Verfahren zur Fernsteuerung wenigstens einer Funktion einer Sicherheitsvorrichtung eines Kraftfahrzeugs, gemäß dem Oberbegriff von Anspruch 7. Zudem bezieht sich die Erfindung auf ein System zur Fernsteuerung wenigstens einer Funktion einer Sicherheitsvorrichtung eines Fahrzeugs mit einem Mobilfunktelefon offenbart, gemäß Anspruch 13. Mobilfunktelefone werden bekanntermaßen zur mobilen Kommunikation genutzt. Das Mobilfunktelefon weist eine Ultrahochfrequenz-Schnittstelle auf, mit der eine Verbindung mit einem Mobilfunknetz aufbaubar ist. Immer mehr ergeben sich neue Anwendungsgebiete, die mit einem Mobilfunktelefon, insbesondere einem Smartphone ausführbar sind.

Die Schrift GB 2 487 447 A offenbart ein Mobilfunktelefon zur Fernsteuerung wenigstens einer Funktion einer Sicherheitsvorrichtung eines Kraftfahrzeugs.

Aufgabe der vorliegenden Erfindung ist es, ein Mobilfunktelefon bereitzustellen, welches in seiner Funktionsweise verbessert ist.

Zur Lösung dieser Aufgabe wird eine Vorrichtung gemäß den Merkmalen des Anspruchs 1, sowie ein Verfahren mit den Merkmalen des Anspruchs 7 und ein System mit den Merkmalen des Anspruchs 13 vorgeschlagen. In den abhängigen Ansprüchen sind bevorzugte Weiterbildungen der Erfindung aufgeführt.

Erfindungsgemäß ist vorgesehen, dass das Mobilfunktelefon eine erste Sende-Empfangseinheit aufweist, wodurch eine Verbindung mit einem Mobilfunknetz aufbaubar ist und zusätzlich eine zweite Sende-Empfangseinheit aufweist, wodurch ein erstes Funksignal empfangbar ist. Durch das empfangene erste Funksignal ist das Mobilfunktelefon in ein Aktivmodus schaltbar. Im geschalteten Aktivmodus ist ein zweites Funksignal mit einem Berechtigungscode zur Steuerung der Funktion der Sicherheitsvorrichtung durch die zweite Sende-Empfangseinheit sendbar. Über die erste Sende-Empfangseinheit des Mobilfunktelefons kann dabei eine Verbindung mit einem Mobilfunknetz aufgebaut werden. Der Aufbau der Verbindung mit dem Mobilfunknetz und die Aussendung des zweiten Funksignals können dabei gleichzeitig erfolgen. Der Aufbau einer Verbindung mit dem Mobilfunknetz für eine mobile Kommunikation oder eine mobile Datenverbindung über das Mobilfunknetz kann über eine UHF-Schnittstelle (Ultrahochfrequenz-Schnittstelle) erfolgen. Ein UHF-Frequenzband ist von 0,3 GHz bis 3 GHz definiert. So kann z. B. in einem Frequenzbereich von 890 MHz bis 915 MHz gearbeitet werden. Der Aufbau der mobilen Verbindung kann über ein Verbindungsprotokoll geschehen, wobei das Verbindungsprotokoll in dem Mobilfunktelefon und auf Seiten des Mobilfunknetzes, insbesondere auf Seiten einer Basisstation, implementiert sein kann. Dabei können verschiedene Daten zwischen dem Mobilfunktelefon und der Basisstation ausgetauscht werden. So kann z. B. zur Einbuchung des Mobilfunktelefons in das Mobilfunknetz eine Authentifizierung durch Austausch eines Schlüssels erfolgen. Dieser Schlüssel kann auf einer SIM-Karte gespeichert werden, wobei die SIM-Karte elektrisch mit dem Mobilfunktelefon verbunden ist. Der Schlüssel kann durch das Mobilfunktelefon ausgelesen werden und an das Mobilfunknetz weitergeleitet werden, wodurch eine Authentifizierung des Mobilfunktelefons erfolgen kann. Im Anschluss daran kann eine mobile Kommunikations- oder Datenverbindung erfolgen. Im Falle, dass das Mobilfunktelefon bereits im Mobilfunknetz eingebucht ist, kann es mehrere Sekunden dauern bis z. B. eine Kommunikationsverbindung aufgebaut worden ist. Daher wird erfindungsgemäß in dem Mobilfunktelefon eine zweite Sende-Empfangseinheit implementiert. Sobald die zweite Sende-Empfangseinheit ein erstes Funksignal empfängt, wobei es sich bei dem ersten Funksignal um eine bestimmte Frequenz handeln kann, insbesondere um eine Trägerfrequenz handeln kann, wird das Mobilfunktelefon direkt in einen Aktivmodus geschaltet. Eine Trägerfrequenz ist eine Frequenz, wobei auf der Frequenz Informationen aufmoduliert sein können. Ist das Mobilfunktelefon im Aktivmodus, so wird ein zweites Funksignal direkt und ohne wesentliche Verzögerung mit einem Berechtigungscode zur Steuerung der Funktion der Sicherheitsvorrichtung gesendet. Das Mobilfunktelefon reagiert direkt bei einem Empfang des ersten Funksignals. Verbindungsprotokolle können unberücksichtigt bleiben. Dies ermöglicht eine direkte Aktion des Mobilfunktelefons bei dem Empfang einer bestimmten Frequenz. Damit lässt sich einfach und wirkungsvoll ein Passiv-Entry-System realisieren. Dem ersten Funksignal können Informationen aufmoduliert werden, so dass das Mobilfunktelefon nur auf bestimmte Trägerfrequenzen mit bestimmten Informationen, insbesondere verschlüsselten Informationen, in einen Aktivmodus schaltbar ist.

Besonders vorteilhaft ist es, dass die zweite Sende-Empfangseinheit ein LF-Modul aufweist. Das LF-Modul kann in einem LF-Frequenzband mit einem Frequenzbereich von 30 kHz bis 300 kHz arbeiten. Damit kann ein LF-Wecksignal von der zweiten Sende-Empfangseinheit empfangen werden. Das LF-Wecksignal kann dabei vorteilhafterweise eine Frequenz von 125 kHz haben, wobei das LF-Wecksignal als erstes Funksignal von der zweiten Sende-Empfangseinheit empfangen werden kann. Dieses Wecksignal schaltet das Mobilfunktelefon in den Aktivmodus. Daraufhin kann von der zweiten Sende-Empfangseinheit ein zweites Funksignal mit einem Berechtigungscode zur Steuerung der Funktion der Sicherheitsvorrichtung gesendet werden. Dies kann über das LF-Modul geschehen, kann aber auch über ein weiteres in der zweiten Sende-Empfangseinheit aufweisendes HF-Modul erfolgen. Der HF-Bereich umfasst ein Frequenzband von 3 bis 30 MHz.

Vorteilhaft ist es, dass andere Module mit einem anderen Frequenzband z. B. im UHF-Bereich zum Einsatz kommen können. Damit kann ein zweites Funksignal von dem Mobiltelefon über die zweite Sende-Empfangseinheit entweder mit einer niedrigen Frequenz oder mit einer hohen Frequenz gesendet werden. Hochfrequenzsignale bieten den Vorteil, dass eine höhere Informationsdichte auf der Trägerfrequenz aufmoduliert werden kann. Allerdings benötigen hochfrequente Signale zur Aussendung eine höhere Energie als niederfrequente Signale. Der Vorteil von niederfrequenten Signalen liegt dementsprechend darin, dass diese zur Aussendung weniger Energie benötigen als hochfrequente Signale. Dies ist im Hinblick auf die Dimensionierung des Energiespeichers für das Mobilfunkgerät zu beachten. Dabei kann in dem Mobilfunkgerät ein Akku, insbesondere ein Lithium-Ionen- oder ein Nickel-Mangan-Hybrid-Akku zum Einsatz kommen. Es ist daher vorteilhaft, dass niederfrequente Signale eine niedrige Dämpfung aufweisen. Damit kann bei einer gleichen Energiemenge mit einer höheren Reichweite eines niederfrequenten Signals gerechnet werden als bei einem Einsatz eines hochfrequenten Signals.

Es ist vorteilhaft, dass der Berechtigungscode über ein Modulationsverfahren auf das zweite Funksignal aufmoduliert wird. Es kann dabei z. B. eine digitale Phasenmodulation zum Einsatz kommen, bei der eine Amplitude gleich bleibt. Diese Modulationsart kann aufgrund seiner Modulations- und Demodulationseigenschaften einfach in Hardwarekomponenten des Mobilfunktelefons umgesetzt werden. Zudem erzeugt es nur geringe Interferenzen auf mögliche Nachbarkanäle.

Weiterhin ist es vorteilhaft, dass die zweite Sende-Empfangseinheit mindestens eine Spule, insbesondere drei separate Spulen aufweist, wobei insbesondere die Spule an einer Elektronikeinheit (19), insbesondere einer Platine, angeordnet ist. Die Spule kann dabei horizontal oder vertikal ausgerichtet sein. Dadurch lassen sich verschiedene Sende- und/oder Empfangsrichtungen erzeugen. Um einen gleichmäßigen Sende-Empfangsbereich zu erzeugen, kann die Spule vorteilhafterweise drei separate Spulen aufweisen. Jede einzelne Spule kann an der Elektronikeinheit angeordnet sein. Die Elektronikeinheit kann dabei eine Platine aufweisen, wobei an der Platine jede Spule separat angeordnet sein kann. Jede Spule weist einen Anschluss mit zwei elektrischen Kontaktelementen auf, wobei jedes Kontaktelement über ein Lötverfahren mit der Platine verbunden sein kann. Die Platine kann im Bereich des durch das Lötverfahren verbundenen Kontaktelementes wenigstens eine Leiterbahn aufweisen, wobei die Leiterbahn über das Lötverfahren elektrisch leitend mit der Leiterbahn verbunden sein kann. Die Leiterbahn kann mit weiteren elektrischen und/oder elektronischen Bauelementen auf der Platine elektrisch verbunden sein. So kann ein elektronisches Bauelement ein Mikroprozessor sein, der die Spule elektrisch ansteuern kann. Dabei kann die Spule um einen Ferritkern gewickelt sein. Insbesondere können die drei separaten Spulen um einen Ferritkern gewickelt sein, wobei deren Windungsflächen in etwa senkrecht zueinander stehen können. Ebenfalls ist es denkbar, dass die Spule planar auf einer Platinenoberseite oder auf einer Platinenunterseite angeordnet ist. Als Spulengeometrie kann dabei eine kreisförmige oder rechteckförmige Leiterbahn gewählt werden. Auch sind andere geometrische Formen denkbar. Auch können zwei separate Spulen zum Einsatz kommen, wobei jeweils eine erste Spule auf der Platineoberseite angeordnet ist und eine zweite Spule auf der Platinenunterseite angeordnet ist. Die Herstellung von planaren Spulen durch bestimmte geometrische Leiterbahnformen auf der Platine kann dabei kostengünstig über ein Ätzverfahren erfolgen.

Vorteilhafterweise ist es weiterhin denkbar, dass eine Spulengeometrie innerhalb der Platine angeordnet sein kann. Damit können drei separate Spulen an der Platine angeordnet werden. Eine erste Spule planar auf der Platinenoberseite, eine zweite Spule planar auf der Platinenunterseite und eine dritte planare Spule in der Platine. Der Aufbau kann durch die Anordnung von wenigstens zwei Platinen erfolgen. Eine erste Platine kann dabei auf der ersten Platinenoberseite und der ersten Platinenunterseite eine Spule aufweisen. Eine zweite Platine kann mit einer Spule an der ersten Platine im Bereich der Spulen auf der ersten Platine angeordnet sein. Durch eine Durchkontaktierung der ersten und/oder der zweiten Platine können die einzelnen Spulen elektrisch z.B. durch Drähte elektrisch verbunden werden. Die Spule kann als ein SMD-Bauteil (Surface Mounted Device) ausführt sein. Das SMD-Bauteil ist leicht handhabbar und kann einfach auf einer Platine ohne Durchkontaktierungen aufgelötet sein. Damit kann das erste Funksignal in allen drei Raumrichtungen genau gemessen werden, wodurch es möglich ist, exakt zwischen einem Fahrzeuginnenraum und einem Fahrzeugaußenraum zu unterscheiden. Dabei kann die Spule über ein LF-Vorstufen-IC mit einem integrierten Mikrocontroller verbunden werden, wodurch die empfangenen Feldstärken in allen drei Raumrichtungen genau gemessen werden können.

Weiterhin ist es vorteilhaft, dass die zweite Sende-Empfangseinheit auf einem externen Modul mit einer ersten Schnittstelle angeordnet ist, wobei insbesondere das Mobilfunktelefon eine zweite Schnittstelle aufweist, die mit der ersten Schnittstelle kompatibel ist. Dadurch ist ein modularer Aufbau der zweiten Sende-Empfangseinheit möglich. Vorteilhafterweise kann das externe Modul in das Mobilfunktelefon eingesetzt werden. Damit kann die zweite Sende-Empfangseinheit nachträglich in das Mobilfunktelefon integriert werden. Ein nachträglicher Einbau der zweiten Sende-Empfangseinheit in das Mobilfunktelefon kann damit ermöglicht werden. Dazu kann das Mobilfunktelefon ein Gehäuse aufweisen, wobei das Gehäuse eine Aufnahme aufweisen kann, wodurch das externe Modul mit der ersten Schnittstelle in die Aufnahme einführbar ist. Das externe Modul mit der zweiten Sende-Empfangseinheit ist in die Aufnahme einführbar, wodurch die erste Schnittstelle mit der zweiten Schnittstelle elektrisch verbunden werden kann. Ein Öffnen des Gehäuses zum Einsatz des externen Moduls in das Mobilfunktelefon kann dadurch ausbleiben. Es ist allerdings auch denkbar, dass das Mobilfunktelefon die zweite Schnittstelle im Inneren des Gehäuses aufweist. Dazu muss das Gehäuse geöffnet werden. Da das Gehäuse die zweite Schnittstelle umgibt, wird die zweite Schnittstelle vor Verunreinigungen durch das Gehäuse wirkungsvoll geschützt. Die erste Schnittstelle kann dabei als Stecker ausgeführt sein, wobei die zweite Schnittstelle als Buchse ausgeführt sein kann. Der Stecker kann dabei metallische Kontaktstifte aufweisen, wobei die Buchse wenigstens einen elektrischen Führungskanal aufweisen kann, wodurch ein elektrischer Kontakt zwischen dem Stecker und der Buchse herstellbar ist.

Es ist vorteilhaft, dass die zweite Schnittstelle ein Bussystem aufweist, insbesondere einen universellen seriellen Bus (USB) aufweist. An dieser Stelle kann das externe Modul mit seiner ersten Schnittstelle mit der zweiten Schnittstelle verbunden werden. Die zweite Schnittstelle kann im Inneren eines Gehäuses des Mobilfunktelefons integriert werden. So kann die zweite Sende-Empfangseinheit auf einem externen Modul mit einer USB-Schnittstelle zum Einsatz kommen. Durch die Integration des externen Moduls im Inneren des Gehäuses des Mobilfunktelefons bleiben das Aussehen und die Haptik des Mobilfunktelefons erhalten.

Weiterhin ist es vorteilhaft, dass das Mobilfunkgerät eine Rechnereinheit aufweist, wobei die zweite Sende-Empfangseinheit mit der Rechnereinheit verbunden ist. Die Rechnereinheit ist ein zentrales Bauelement, an dem alle nahezu elektronischen Komponenten des Mobilfunktelefons verbunden sind. Dazu gehören ein Eingabefeld und/oder ein Display. Das Mobilfunktelefon kann nur ein Display aufweisen, über das Benutzereingaben möglich sind. Hier kann es sich um ein resistives oder ein kapazitives Display handeln. Zudem können an der Rechnereinheit ein Mikrofon und ein Lautsprecher angeordnet sein. Über die Rechnereinheit können auch die erste und die zweite Sende-Empfangseinheit gesteuert werden. Die erste Sende-Empfangseinheit kann dabei im UHF-Bereich senden, wobei das Frequenzband im UHF-Bereich zwischen 0,3 und 3 GHz liegen kann. Die zweite Sende-Empfangseinheit kann dabei wie bereits erwähnt, insbesondere in einem LF-Frequenzband betrieben werden. Die erste und/oder die zweite Sende-Empfangseinheit können über eine Energiemanagement-Komponente gesteuert werden, welche mit der Rechnereinheit verbunden sein kann. Die Energiemanagement-Komponente kann mit einer Energieeinheit verbunden sein, insbesondere mit einem Akku. Auch der Einsatz einer elektrischen Ladeeinheit ist dabei denkbar. Zusätzlich können weitere Komponenten wie z. B. ein SIM-Modul (Subscriber Identity Module) und/oder ein Speicher an die Rechnereinheit elektrisch verbunden werden. Damit kann die Rechnereinheit die zweite Sende-Empfangseinheit steuern, insbesondere kann die Rechnereinheit die zweite Sende-Empfangseinheit über die Energiemanagement-Komponente steuern.

Die erfindungsgemäße Aufgabe wird ebenfalls gelöst durch ein Verfahren zur Fernsteuerung wenigstens einer Funktion einer Sicherheitsvorrichtung eines Kraftfahrzeugs mit einem Mobilfunktelefon. Das Mobilfunktelefon weist eine erste Sende-Empfangseinheit zum Aufbau einer Verbindung mit einem Mobilfunknetz auf. Erfindungsgemäß ist vorgesehen, dass das Mobilfunktelefon eine zweite Sende-Empfangseinheit aufweist, wodurch ein erstes Funksignal empfangen wird. Das Mobilfunktelefon wird durch das empfangene Funksignal in einen Aktivmodus geschaltet. Im geschalteten Aktivmodus wird ein zweites Funksignal mit einem Berechtigungscode zur Steuerung der Funktion der Sicherheitsvorrichtung durch die zweite Sende-Empfangseinheit gesendet. Vorteilhaft bei diesem Verfahren ist es, dass als erstes Funksignal die Aussendung einer reinen Frequenz, insbesondere im LF-Bereich, ausreicht. Die Frequenz, welches insbesondere eine Frequenz von 125 kHz sein kann, kann dabei unmoduliert bleiben. Das bedeutet, dass das Mobilfunktelefon bei einem Empfang dieser Frequenz automatisch in einen Aktivmodus geschaltet wird. Eine Auswertung von Informationen, die auf die Trägerfrequenz aufmoduliert werden können, kann daher im Mobilfunktelefon unterbleiben. Dies bedeutet eine schnelle und effiziente Umschaltung in den Aktivmodus. Es kann eine bereitgestellte Rechenleistung der Rechnereinheit des Mobilfunktelefons zur Auswertung von aufmodulierten Informationen unterbleiben. Dies bedeutet, dass die zweite Sende-Empfangseinheit das erste Funksignal als Frequenz empfängt und daraufhin das Mobilfunktelefon in den Aktivmodus geschaltet wird. Die Umschaltung in den Aktivmodus kann dabei durch die Rechnereinheit und/oder eine Energiemanagementkomponente erfolgen.

Es ist dabei vorteilhaft, dass nur Frequenzen als erstes Funksignal, die eine bestimmte Energie aufweisen, das Mobilfunktelefon in den Aktivmodus schalten können. Mit zunehmender Entfernung von der Quelle der aussendenden Frequenz nehmen die Amplituden der Frequenz ab. So ist es denkbar, dass nur Frequenzen mit einer bestimmten Amplitudenstärke durch das Mobilfunktelefon als empfangen bewertet werden. Bei einer empfangenen Frequenz mit einer bestimmten Amplitudenstärke wird das Mobilfunktelefon in den Aktivmodus geschaltet. Damit wird wirkungsvoll verhindert, dass schwache und weit entfernte abgestrahlte Frequenzen das Mobilfunktelefon in den Aktivmodus setzen können.

Als vorteilhaft hat es sich herausgestellt, dass das erste Funksignal ein Fahrzeugidentifizierungsmerkmal aufweist, insbesondere ein verschlüsseltes Fahrzeugidentifizierungsmerkmal aufweist. Damit wird wirkungsvoll verhindert, dass das Mobilfunktelefon bei einem Empfang des ersten Funksignals direkt in einen Aktivmodus schaltet. Das Mobilfunktelefon kann das Fahrzeugidentifizierungsmerkmal aus dem ersten Funksignal extrahieren, so dass nur wenigstens ein bestimmter Fahrzeugtyp mit einem ersten Funksignal das Mobilfunktelefon in den Aktivmodus schalten lässt. Dabei kann das Fahrzeugidentifizierungsmerkmal für einen bestimmten Fahrzeugtyp gelten oder auch derart ausgestaltet sein, dass eine eindeutige Kennung des Fahrzeugs als Fahrzeugidentifizierungsmerkmal auf dem ersten Funksignal moduliert ist. Dazu kann zur Sicherheit das Fahrzeugidentifizierungsmerkmal verschlüsselt sein, so dass bei einem Empfang des ersten Funksignals durch Nichtbefugte das Fahrzeugidentifizierungsmerkmal nicht verwendet werden kann.

Weiterhin ist es vorteilhaft, dass der Berechtigungscode verschlüsselt übertragen wird. Um eine sichere Übertragung des Berechtigungscodes von dem Mobilfunktelefon zum Kraftfahrzeug zu ermöglichen, können verschiedene Verschlüsselungs-Algorithmen zur Anwendung kommen. Dabei werden zwischen dem Kraftfahrzeug und dem Mobilfunktelefon verschlüsselte Signale ausgetauscht, so dass festgestellt werden kann, ob das Mobilfunktelefon eines berechtigten Nutzers sich in der Nähe des Kraftfahrzeugs befindet. Die Verschlüsselung kann mit verschiedenen Bittiefen erfolgen. So ist z. B. eine 128-Bit-Verschlüsselung vorteilhaft, wobei eine 256-Bit-Verschlüsselung sehr vorteilhaft ist.

Es ist vorteilhaft, dass der Berechtigungscode über ein Mobilfunknetz dem Mobilfunktelefon übermittelt wird, insbesondere verschlüsselt übermittelt wird. Der Berechtigungscode kann dabei verschlüsselt auf einem Server im Internet gespeichert sein. Über einen Service-Provider, der insbesondere ein Hersteller des Kraftfahrzeugs sein kann, kann der Nutzer des Mobilfunktelefons sich den Berechtigungscode übermitteln lassen. Dies kann insbesondere zum Tragen kommen, wenn der berechtigte Benutzer des Kraftfahrzeugs ein fremdes Mobilfunktelefon zur Fernsteuerung der Funktion der Sicherheitsvorrichtung des Kraftfahrzeugs nutzen möchte. Vorteilhaft ist es dabei, dass das fremde Mobilfunktelefon die zweite Sende-Empfangseinheit zur Aussendung des zweiten Funksignals mit dem Berechtigungscode aufweist. Des Weiteren ist dabei denkbar, dass das Kraftfahrzeug eine Mobilfunkkomponente aufweist. Diese Mobilfunkkomponente kann dann mit einem Mobilfunknetz eine Datenverbindung aufbauen. Der Service-Provider kann dann über diese Datenverbindung direkt die Funktion der Sicherheitsvorrichtung des Kraftfahrzeugs fernsteuern.

Weiterhin ist es vorteilhaft, dass das Mobilfunktelefon eine Anfrage an einen Provider zur Übermittlung eines Berechtigungscodes aus dem Internet sendet. Da das Mobilfunktelefon eine erste Sendeeinheit aufweist, mit der eine Verbindung mit dem Mobilfunknetz aufbaubar ist, kann eine Datenverbindung mit einem Server, der im Internet erreichbar ist, aufgebaut werden. Der Server kann dabei von dem Hersteller des Fahrzeugs mit Daten versorgt und betrieben werden. Im Falle, dass der Nutzer des Kraftfahrzeugs sein Mobilfunktelefon verliert, ist es damit möglich, auf einem zweiten Mobilfunktelefon den Berechtigungscode zu übertragen. Dabei ist es denkbar, dass der Provider zuvor eine Authentifizierung des Nutzers des Kraftfahrzeugs vornimmt. Dies kann z. B. über eine zuvor gespeicherte Passwortabfrage geschehen. Im Falle, dass die Berechtigung positiv verläuft, kann dann der Provider dem zweiten Mobilfunktelefon den Berechtigungscode zusenden.

Die erfindungsgemäße Aufgabe wird ebenfalls durch ein System zur Fernsteuerung wenigstens einer Funktion einer Sicherheitsvorrichtung eines Fahrzeugs mit einem Mobilfunktelefon gelöst. Das Fahrzeug weist dabei wenigstens einen Sensor auf. Durch den Sensor ist ein Ereignis registrierbar. Bei einer Registrierung des Ereignisses durch das Fahrzeug ist durch eine fahrzeugseitige Sende-Empfangseinheit ein erstes Funksignal aussendbar. Das erste Funksignal ist von dem Mobilfunktelefon empfangbar, wobei das Mobilfunktelefon in einen Aktivmodus bei einem Empfang des ersten Funksignals schaltbar ist. Anschließend ist ein zweites Funksignal mit einem Berechtigungscode durch die zweite Sende-Empfangseinheit sendbar. Das zweite Funksignal ist durch die fahrzeugseitige Sende-Empfangseinheit empfangbar. Es erfolgt eine Auswertung des zweiten Funksignals mit dem Berechtigungscode durch eine fahrzeugseitige Elektronikeinheit. Im Falle einer positiven Auswertung des Berechtigungscodes erfolgt eine Aktivierung der Funktion der Sicherheitsvorrichtung. Die Sicherheitsvorrichtung kann dabei auf eine Zentralverriegelung oder auch eine Wegfahrsperre oder einen elektrischen Fensterheber gerichtet sein. Der Berechtigungscode kann für mehrere Sicherheitsvorrichtungen ausgelegt sein. Der Sensor kann vorteilhafterweise ein kapazitiver Näherungssensor und/oder ein optisches System und/oder ein Radarsystem sein.

Auch ist es denkbar, dass eine Ultraschallvorrichtung zum Einsatz kommt. Ein Ereignis kann über einen kapazitiven Näherungssensor registriert werden, wobei der kapazitive Näherungssensor vorteilhafterweise in der Nähe einer Handhabe einer Kraftfahrzeugtür verbaut sein kann. Wenn der Nutzer des Kraftfahrzeugs sich diesem Sensor nähert, so ändert sich das elektrische Feld, wodurch das Ereignis eine Annäherung an den kapazitiven Näherungssensor durch das Kraftfahrzeug ist. Eine Registrierung der Annäherung eines Nutzers des Kraftfahrzeuges kann dabei über einen Bereich kleiner einem Meter erfolgen. Über die Ultraschallvorrichtung und/oder ein optisches System kann bereits eine Annäherung einer Person durch den Sensor wahrgenommen werden. Das Ereignis entspricht in diesem Fall also der Annäherung einer Person an das Kraftfahrzeug. Dadurch kann es ermöglicht werden, eine Annäherung des Nutzers des Kraftfahrzeuges bereits aus einer Entfernung von über einem Meter zu registrieren. Vorteilhafterweise ist dabei der Nutzer von einer Entfernung von 10 Meter bis 20 Meter zum Kraftfahrzeug registrierbar. Das optische System kann mit einer Gesichtserkennungssoftware ausgestaltet sein, so dass das Ereignis nur im Falle der Gesichtserkennung des Nutzers des Kraftfahrzeugs registriert wird.

Als Ereignis kann auch eine Bewegungsabfolge definiert sein, welche z. B. durch einen bestimmten Bewegungsablauf von Extremitäten des Nutzers des Kraftfahrzeuges definiert sein kann. So kann z. B. ein Klatschen des Nutzers von dem optischen System wahrgenommen werden, wobei das Klatschen des Nutzers als Ereignis registriert wird.

Bei einer Registrierung des Ereignisses durch den Sensor kann dabei eine Ausstrahlung des ersten Funksignals im LF-Bereich erfolgen, insbesondere mit einer Frequenz von 125 kHz erfolgen. Das Mobilfunktelefon kann das erste Funksignal empfangen, worauf das Mobilfunktelefon in einen Aktivmodus gesetzt wird. Das erste Funksignal kann zusätzlich wenigstens eine Information tragen, wobei zunächst eine Auswertung der Information durch das Mobilfunktelefon erfolgt. So kann im Falle einer positiven Auswertung der Information das Mobilfunktelefon in den Aktivmodus gesetzt werden. Im Aktivmodus sendet das Mobilfunktelefon ein zweites Funksignal mit einem Berechtigungscode. Der Berichtigungscode kann auf dem zweiten Funksignal aufmoduliert sein. Dabei kann das Mobilfunktelefon n einem Speicher mehrere Berechtigungscodes für verschiedene Funktionen der Sicherheitsvorrichtung beinhalten. Das zweite Funksignal ist dabei von der fahrzeugseitigen Sende-Empfangseinheit empfangbar. Eine fahrzeugseitige Rechnereinheit wertet den Berechtigungscode aus. Bei einer positiven Auswertung erfolgt eine Aktivierung der Funktion der Sicherheitsvorrichtung. Die Sicherheitsvorrichtung kann dabei mehrere Funktionen steuern, wie z. B. elektrische Fensterheber und/oder eine elektrische Wegfahrsperre und/oder ein elektromechanisches Lenkradschloss. Vorteilhafterweise kann durch die Sicherheitsvorrichtung ein Verriegeln und/oder Entriegeln einer Fahrzeugtür, einer Heckklappe oder eines Tankdeckels des Kraftfahrzeuges erfolgen. Auch ist es denkbar, dass durch die Sicherheitsvorrichtung eine automatische Öffnung oder Schließung von bewegbaren Kraftfahrzeugkomponenten, wie z. B. der Kraftfahrzeugtür, der Heckklappe oder des Tankdeckels erfolgen kann. Dabei können verschiedene Berechtigungscodes zur Aktivierung verschiedener Funktionen der Sicherheitsvorrichtung durch das zweite Funksignal gesteuert werden.

Weitere Maßnahmen und Vorteile der Erfindung ergeben sich aus den Ansprüchen, der nachfolgenden Beschreibung und den Zeichnungen. Ebenfalls gelten die offenbarten Merkmale aus der erfindungsgemäßen Vorrichtung auch für das erfindungsgemäße Verfahren, das erfindungsgemäße System und umgekehrt. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Ansicht eines Mobilfunktelefons zur Fernsteuerung einer Funktion einer Sicherheitsvorrichtung eines Kraftfahrzeugs,
- Figur 2: eine schematische Ansicht eines Mobilfunktelefons mit einem integrierbaren externen Modul,
- Figur 3: einen schematischen Aufbau eines Mobilfunktelefons und
- Figur 4: eine schematische Ansicht eines Systems zur Fernsteuerung einer Funktion einer Sicherheitsvorrichtung eines Fahrzeugs mit einem Mobilfunktelefon.

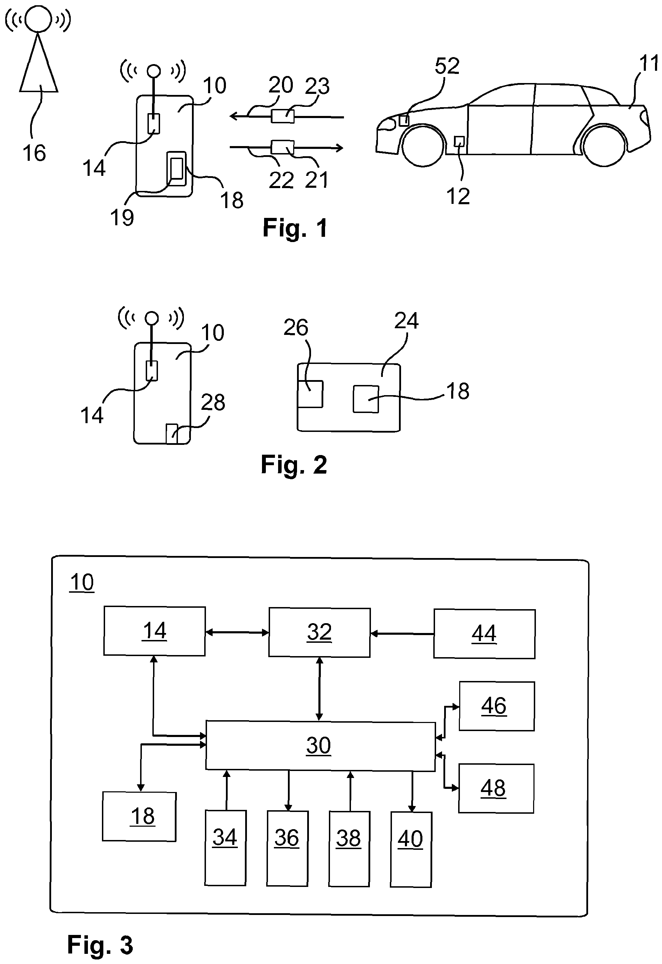

In Figur 1 ist schematisch ein Mobilfunktelefon 10 zur Fernsteuerung wenigstens einer Funktion einer Sicherheitsvorrichtung 12 eines Kraftfahrzeugs 11 dargestellt. Das Mobilfunktelefon 10 weist dabei eine erste Sende-Empfangseinheit 14 auf. Über die erste Sende-Empfangseinheit 14 ist eine Verbindung mit einem Mobilfunknetz 16 aufbaubar. Die Verbindung kann dabei aus einer Daten- oder Sprachverbindung bestehen. Der Aufbau der Verbindung kann über den GSM-, GPRS-, UMTS- oder LTE-Standard erfolgen. Das Mobilfunktelefon 10 weist eine zweite Sende-Empfangseinheit 18 auf, wodurch ein erstes Funksignal 20 empfangbar ist. An der zweiten Sende-Empfangseinheit 18 ist eine Elektronikeinheit 19 angeordnet. An der Elektronikeinheit ist wenigstens eine Spule angeordnet, wobei durch die Spule das erste Funksignal 20 empfangbar ist. Die Elektronikeinheit 19 kann dabei eine Platine aufweisen, an der die Spule angeordnet ist. Das erste Funksignal 20 kann dabei in einem LF-Bereich liegen, insbesondere eine Frequenz von 125 kHz empfangen. Auf der Frequenz von 125 kHz, welches als Trägerfrequenz zum Einsatz kommt, können Informationen aufmoduliert werden. Hier können verschiedene Modulationsarten zum Einsatz kommen. Das Mobilfunktelefon 10 ist dabei in der Lage durch die zweite Sende-Empfangseinheit 18, insbesondere durch die Elektronikeinheit 19, die Trägerfrequenz als erstes Funksignal 20 zu empfangen. Bei einem Empfang des ersten Funksignals 20 wird das Mobilfunktelefon 10 in einen Aktivmodus gesetzt. Dadurch erfolgt die Aussendung eines zweiten Funksignals 22 durch die zweite Sende-Empfangseinheit 18 mit einem Berechtigungscode 21. Das Kraftfahrzeug 11 kann dabei das zweite Funksignal 22 mit dem Berechtigungscode 21 empfangen, wobei eine Funktion der Sicherheitsvorrichtung 12, welche an dem Kraftfahrzeug 11 angeordnet ist, ausgeführt werden kann. Der Empfang des zweiten Funksignals 22 erfolgt durch eine fahrzeugseitige Sende-Empfangseinheit 52, welche an dem Kraftfahrzeug 11 angeordnet ist. Die fahrzeugseitige Sende-Empfangseinheit 52 kann dabei zur Aussendung des ersten Funksignals 20 dienen. Damit das Mobilfunktelefon 10 nicht permanent in den Aktivmodus bei einem Empfang des ersten Funksignals 20 mit lediglich einer bestimmten Frequenz gesetzt wird, kann dem ersten Funksignal 20 ein Fahrzeugidentifizierungsmerkmal, insbesondere eine verschlüsseltes Fahrzeugidentifizierungsmerkmal 23, aufmoduliert sein. Diese Fahrzeugidentifizierungsmerkmal 23 kann vor Setzen des Aktivmodus des Mobilfunktelefons 10 durch das Mobilfunktelefon 10 ausgewertet werden. Bei einer positiven Auswertung der aufmodulierten Fahrzeugidentifizierungsmerkmals 23 als Information des empfangenen Funksignals 20 erfolgt dann das Setzen des Mobilfunktelefons 10 in den Aktivmodus.

In Figur 2 ist schematisch ein Mobilfunktelefon 10 mit einem externen Modul 24 dargestellt. Das Mobilfunktelefon 10 weist eine erste Sende-Empfangseinheit 14 auf, mit der eine Verbindung mit einem Mobilfunknetz 16 aufgebaut werden kann. Das Mobilfunktelefon 10 weist eine zweite Schnittstelle 28 auf. In diese zweite Schnittstelle 28 kann das externe Modul 24 mit einer kompatiblen ersten Schnittstelle 26 eingesetzt werden. Vorteilhafterweise weist das externe Modul 24 die zweite Sende-Empfangseinheit 18 auf. Dadurch kann nachträglich ein Mobilfunktelefon 10 mit einer zweiten Sende-Empfangseinheit 18 nachgerüstet werden.

In Figur 3 ist ein schematischer Aufbau eines Mobilfunktelefons 10 dargestellt. Das Herzstück bildet dabei eine Rechnereinheit 30. An dieser Rechnereinheit 30 sind essentielle Komponenten, wie ein Mikrofon 34, ein Lautsprecher 36, eine Tastatur 38 und ein Display 40 angeordnet. Durch den Einsatz eines Touchdisplays kann die Tastatur 38 entfallen. An der Rechnereinheit 30 ist ein SIM-Modul 48 angeordnet, auf dem Identifizierungsmerkmale eines Nutzers gespeichert sind. Dadurch kann der Nutzer des Mobilfunktelefons 10 authentifiziert werden. Die Rechnereinheit 30 weist einen Speicher 46 auf, in dem insbesondere Berechtigungscodes 21 gespeichert werden können. Die Speicherung der Berechtigungscodes 21 kann dabei verschlüsselt erfolgen. Eine Energiemanagement-Komponente 32 wird über die Rechnereinheit 30 gesteuert. An der Energiemanagement-Komponente 32 ist eine Energieeinheit 44 angeordnet. Zum Aufbau einer Verbindung mit einem Mobilfunknetz ist die erste Sende-Empfangseinheit 14 ebenfalls mit der Rechnereinheit 30 verbunden. Da die Rechnereinheit 30 alle notwendigen Informationen zentral verwaltet, ist auch an dieser die zweite Sende-Empfangseinheit 18 angeordnet. Die zweite Sende-Empfangseinheit 18 kann dabei verschiedene Frequenzmodule aufweisen, die in verschiedenen Frequenzbändern Frequenzen ausstrahlen und empfangen können.

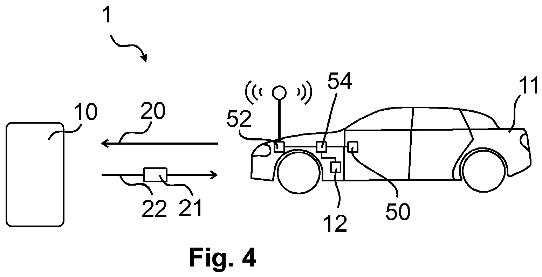

In Figur 4 ist eine schematische Ansicht eines Systems 1 zur Fernsteuerung wenigstens einer Funktion einer Sicherheitsvorrichtung 12 eines Fahrzeugs 11 mit einem Mobilfunktelefon 10 dargestellt. Das Fahrzeug 11 weist dabei einen Sensor 50 auf. Dieser Sensor 50 kann ein Ereignis registrieren. Der Sensor 50 kann dabei z. B. ein kapazitiver Näherungssensor sein, wobei bei einer Annäherung eines Nutzers an das Kraftfahrzeug dieser kapazitiver Näherungssensor die Annäherung als ein Ereignis registrieren kann. Im Falle, dass der Sensor 50 das Ereignis registriert hat, wird ein erstes Funksignal 20 durch eine fahrzeugseitige Sende-Empfangseinheit 52 ausgesendet. Das erste Funksignal 20 ist von dem Mobilfunktelefon 10 empfangbar, wobei das Mobilfunktelefon 10 in einen Aktivmodus bei einem Empfang des ersten Funksignals schaltet. Daraufhin sendet das Mobilfunktelefon 10 ein zweites Funksignal 22 mit einem Berechtigungscode 21. Das erste Funksignal 20 kann verschiedene Informationen 23 beinhalten, die durch das Mobilfunktelefon 10 ausgewertet werden können. Nachdem das Mobilfunktelefon 10 ein zweites Funksignal 22 mit einem Berechtigungscode 21 ausgesendet hat, kann dieses von der fahrzeugseitigen Sende-Empfangseinheit 52 empfangen werden. Hierbei kommt eine Rechnereinheit 54 zum Einsatz, die den Berechtigungscode 21 auswertet und im Falle einer positiven Auswertung eine Funktion einer Sicherheitsvorrichtung 12 steuert. Dabei können verschiedene Funktionen der Sicherheitsvorrichtung 12 durch die Rechnereinheit 54 gesteuert werden.

Die Ausführungen der Merkmalsbeschreibungen des Mobilfunktelefons 10 in Figur 1 sind mit Merkmalen des Mobilfunktelefons 10 in den Figuren 2 bis 4 kombinierbar und umgekehrt.

Dies gilt ebenfalls für alle Merkmalskombinationen, die sich aus den Figuren 1 bis 4 ergeben können.

### Bezugszeichenliste

- 10: Mobiltelefon
- 11: Kraftfahrzeug
- 12: Sicherheitsvorrichtung
- 14: erste Sende-Empfangseinheit
- 16: Mobilfunknetz
- 18: zweite Sende-Empfangseinheit
- 20: erstes Funksignal
- 21: Berechtigungscode
- 22: zweites Funksignal
- 23: Fahrzeugidentifizierungsmerkmal
- 24: externes Modul
- 26: erste Schnittstelle
- 28: zweite Schnittstelle
- 30: Rechnereinheit
- 32: Energiemanagement-Komponente
- 34: Mikrofon
- 36: Lautsprecher
- 38: Tastatur
- 40: Display
- 44: Energieeinheit
- 46: Speicher
- 48: SIM-Modul
- 50: Sensor
- 52: fahrzeugseitige Sende-Empfangseinheit
- 54: Rechnereinheit

## Patentansprüche

1. Mobilfunktelefon (10) zur Fernsteuerung wenigstens einer Funktion einer Sicherheitsvorrichtung (12) eines Kraftfahrzeugs (11), wobei das Mobilfunktelefon (10) eine erste Sende-Empfangseinheit (14) aufweist, wodurch eine Verbindung mit einem Mobilfunknetz (16) aufbaubar ist,
**dadurch gekennzeichnet,**
**dass** das Mobilfunktelefon (10) eine zweite Sende-Empfangseinheit (18) aufweist, wodurch ein erstes Funksignal (20) empfangbar ist, wobei das Mobilfunktelefon (10) durch das empfangene erste Funksignal (20) in einen Aktivmodus schaltbar ist und im geschalteten Aktivmodus ein zweites Funksignal (22) mit einem Berechtigungscode (21) zur Steuerung der Funktion der Sicherheitsvorrichtung (12) durch die zweite Sende-Empfangseinheit (18) sendbar ist, wobei die zweite Sende-Empfangseinheit (18) mindestens eine Spule aufweist, wobei die Spule an einer Elektronikeinheit (19) angeordnet ist.

2. Mobilfunktelefon (10) nach Anspruch 1,
**dadurch gekennzeichnet,**
**dass** die zweite Sende-Empfangseinheit (18) ein LF-Modul aufweist.

3. Mobilfunktelefon (10) nach Anspruch 1 oder 2,
**dadurch gekennzeichnet,**
**dass** die zweite Sende-Empfangseinheit (18) drei separate Spulen aufweist, wobei die Elektronikeinheit (19) eine Platine ist.

4. Mobilfunktelefon (10) nach einem der Ansprüche 1 bis 3,
**dadurch gekennzeichnet,**
**dass** die zweite Sende-Empfangseinheit (18) an einem externen Modul (24) mit einer ersten Schnittstelle (26) angeordnet ist, wobei insbesondere das Mobilfunktelefon (10) eine zweite Schnittstelle (28) aufweist, die mit der ersten Schnittstelle (26) kompatibel ist.

5. Mobilfunktelefon (10) nach Anspruch 4,
**dadurch gekennzeichnet,**
**dass** das externe Modul (24) für das Mobilfunktelefon (10) nachrüstbar ist,
insbesondere dass die zweite Schnittstelle (28) ein Bussystem aufweist, insbesondere einen Universellen Seriellen Bus (USB) aufweist.

6. Mobilfunktelefon (10) nach einem der vorhergehenden Ansprüche,
**dadurch gekennzeichnet,**
**dass** der Berechtigungscode (21) über ein Modulationsverfahren auf das zweite Funksignal (22) aufmoduliert ist.

7. Verfahren zur Fernsteuerung wenigstens einer Funktion einer Sicherheitsvorrichtung (12) eines Kraftfahrzeugs (11) mit einem Mobiffunktelefon (10), wobei das Mobilfunktelefon (10) eine erste Sende-Empfangseinheit (14) zum Aufbau einer Verbindung mit einem Mobilfunknetz (16) aufweist,
**dadurch gekennzeichnet,**
**dass** das Mobilfunktelefon (10) eine zweite Sende-Empfangseinheit (18) aufweist, wodurch ein erstes Funksignal (20) empfangen wird, wobei das Mobilfunktelefon (10) durch das empfangene erste Funksignal in einen Aktivmodus geschaltet wird und im geschalteten Aktivmodus ein zweites Funksignal (22) mit einem Berechtigungscode (21) zur Steuerung der Funktion der Sicherheitsvorrichtung (12) durch die zweite Sende-Empfangseinheit (18) gesendet wird, wobei die zweite Sende-Empfangseinheit (18) mindestens eine Spule aufweist, wobei die Spule an einer Elektronikeinheit (19), angeordnet wird.

8. Verfahren nach Anspruch 7,
**dadurch gekennzeichnet,**
**dass** das erste Funksignal (20) ein Fahrzeugidentifizierungsmerkmal aufweist, insbesondere ein verschlüsseltes Fahrzeugidentifizierungsmerkmal aufweist.

9. Verfahren nach Anspruch 7 oder 8,
**dadurch gekennzeichnet,**
**dass** der Berechtigungscode (21) verschlüsselt übertragen wird.

10. Verfahren nach einem der Ansprüche 7 bis 9,
**dadurch gekennzeichnet,**
**dass** der Berechtigungscode (21) über ein Mobilfunknetz (16) dem Mobilfunktelefon (10) übermittelt wird, insbesondere verschlüsselt übermittelt wird.

11. Verfahren nach einem der Ansprüche 7 bis 10,
**dadurch gekennzeichnet,**
**dass** der Berechtigungscode (21) über eine Funkschnittstelle, insbesondere über Bluetooth zum Mobilfunktelefon übertragen wird.

12. Verfahren nach einem der Ansprüche 7 bis 11,
**dadurch gekennzeichnet,**
**dass** das Mobilfunktelefon (10) eine Anfrage an einen Provider zur Übermittelung eines Berechtigungscodes (21) aus dem Internet sendet.

13. System (1) zur Fernsteuerung wenigstens einer Funktion einer Sicherheitsvorrichtung (12) eines Fahrzeuges (11) mit einem Mobilfunktelefon (10), wobei das Fahrzeug (11) wenigstens einen Sensor (50) aufweist und ein Ereignis durch den Sensor (50) registrierbar ist, wobei ein erstes Funksignal (20) durch eine fahrzeugseitige Sende-Empfangseinheit (52) bei einer Registrierung des Ereignisses aussendbar ist, wobei das erste Funksignal (20) vom Mobilfunktelefon (10) durch eine zweite Sende-Empfangseinheit (18) empfangbar ist und das Mobilfunktelefon (10) in einen Aktivmodus bei einem Empfang des ersten Funksignals (20) schaltbar ist und anschließend ein zweites Funksignal (22) mit einem Berechtigungscode (21) durch die zweite Sende-Empfangseinheit (18) sendbar ist und das zweite Funksignal (22) durch die fahrzeugseitige Sende-Empfangseinheit (52) empfangbar ist, wobei eine Auswertung durch eine fahrzeugseitige Rechnereinheit (54) derart durchführbar ist, dass eine Aktivierung der Funktion der Sicherheitsvorrichtung (12) bei einer positiven Auswertung des Berechtigungscodes (21) erfolgt, wobei der Sensor (50) ein kapazitiver Näherungssensor und/oder ein optisches System und/oder ein Radarsystem ist.

14. System (1) nach Anspruch 13 ,
**dadurch gekennzeichnet,**
**dass** das Mobilfunktelefon (10) mit Merkmalen eines Mobilfunktelefons (10) gemäß einem der Ansprüche 1 bis 6 ausgebildet ist und/oder das System zum Betreiben des Verfahrens nach einem der Ansprüche 7 bis 12 konfiguriert ist.

## Claims

1. Mobile radio telephone (10) for remote control of at least one function of a safety device (12) of a motor vehicle (11), the mobile radio telephone (10) having a first transceiver unit (14),
whereby a connection with a mobile radio network (16) can be established,
**characterized in that**
the mobile radio telephone (10) has a second transceiver unit (18),
whereby a first radio signal (20) is receivable,
wherein the mobile radio telephone (10) can be switched into an active mode by the received first radio signal (20) and in the switched active mode a second radio signal (22) with an authorization code (21) for controlling the function of the safety device (12) can be transmitted by the second transceiver unit (18),
said second transceiver unit (18) comprising at least one coil,
the coil being arranged on an electronic unit (19).

2. Mobile radio telephone (10) according to claim 1,
**characterized in that**
the second transceiver unit (18) has an LF module.

3. Mobile radio telephone (10) according to claim 1 or 2,
**characterized in that**
the second transceiver unit (18) has three separate coils
wherein the electronic unit (19) is a circuit board.

4. Mobile radio telephone (10) according to any of claims 1 to 3,
**characterized in that**
the second transceiver unit (18) is arranged on an external module (24) with a first interface (26),
in particular the mobile radio telephone (10) having a second interface (28) which is compatible with the first interface (26).

5. Mobile radio telephone (10) according to claim 4,
**characterized in that**
the external module (24) can be retrofitted for the mobile radio telephone (10),
in particular that the second interface (28) has a bus system,
in particular a Universal Serial Bus (USB).

6. Mobile radio telephone (10) according to one of the preceding claims,
**characterized in that**
the authorization code (21) is modulated onto the second radio signal (22) via a modulation method .

7. Method for remote control of at least one function of a safety device (12) of a motor vehicle (11) having a mobile radio telephone (10),
the mobile radio telephone (10) having a first transceiver unit (14) for establishing a connection with a mobile radio network (16),
**characterized in that**
the mobile radio telephone (10) has a second transceiver unit (18),
whereby a first radio signal (20) is received,
the mobile radio telephone (10) being switched into an active mode by the received first radio signal and, in the switched active mode, a second radio signal (22) having an authorization code (21) for controlling the function of the safety device (12) being transmitted by the second transceiver unit (18),
said second transceiver unit (18) comprising at least one coil,
the coil being arranged on an electronic unit (19).

8. Procedure according to claim 7,
**characterized in that**
the first radio signal (20) has a vehicle identification feature,
in particular has an encrypted vehicle identification feature.

9. Procedure according to claim 7 or 8,
**characterized in that**
the authorization code (21) is transmitted in encrypted form.

10. A method according to any of claims 7 to 9,
**characterized in that**
the authorization code (21) is transmitted to the mobile radio telephone (10) via a mobile radio network (16),
in particular is transmitted in encrypted form.

11. A method according to any of claims 7 to 10,
**characterized in that**
the authorization code (21) is transmitted via a radio interface,
in particular via Bluetooth to the mobile radio telephone.

12. A method according to any of claims 7 to 11,
**characterized in that**
the mobile radio telephone (10) sends a request to a provider for transmitting an authorization code (21) from the Internet.

13. System (1) for remote control of at least one function of a safety device (12) of a vehicle (11) with a mobile radio telephone (10),
wherein the vehicle (11) has at least one sensor (50) and an event can be registered by the sensor (50),
wherein a first radio signal (20) is transmittable by a vehicle-side transceiver unit (52) upon registration of the event,
the first radio signal (20) being receivable by the mobile radio telephone (10) by a second transceiver unit (18) and
the mobile radio telephone (10) can be switched into an active mode when the first radio signal (20) is received and then a second radio signal (22) with an authorization code (21) can be transmitted by the second transceiver unit (18) and
the second radio signal (22) is receivable by the vehicle-side transceiver unit (52), wherein an evaluation can be carried out by a vehicle-side computer unit (54) in such a way that the function of the safety device (12) is activated if the authorization code (21) is evaluated positively,
wherein the sensor (50) is a capacitive proximity sensor and/or an optical system and/or a radar system.

14. System (1) according to claim 13 ,
**characterized in that**
the mobile radio telephone (10) is configured with features of a mobile radio telephone (10) in accordance with one of claims 1 to 6
and/or
the system is configured to operate the procedure according to any of claims 7 to 12.

## Revendications

1. Radiotéléphone mobile (10) pour la commande à distance d'au moins une fonction d'un dispositif de sécurité (12) d'un véhicule automobile (11), le radiotéléphone mobile (10) comportant une première unité émettrice-réceptrice (14),
dans lequel une connexion avec un réseau radio mobile (16) peut être établie,
**caractérisé en ce que**
le radiotéléphone mobile (10) comporte une deuxième unité émettrice-réceptrice (18), dans lequel un premier signal radio (20) est reçu,
dans lequel le radiotéléphone mobile (10) peut être commuté en mode actif par le premier signal radio reçu (20) et dans le mode actif commuté, un deuxième signal radio (22) avec un code d'autorisation (21) pour commander la fonction du dispositif de sécurité (12) peut être transmis par la deuxième unité émetteur-récepteur (18),
Dans lequel une deuxième unité émettrice-réceptrice (18) comprenant au moins une bobine,
la bobine étant disposée sur une unité électronique (19).

2. Radiotéléphone mobile (10) selon la revendication 1,
**caractérisé en ce que**
la deuxième unité émettrice-réceptrice (18) présente un module LF.

3. Radiotéléphone mobile (10) selon la revendication 1 ou 2,
**caractérisé en ce que**
la deuxième unité émettrice-réceptrice (18) comporte trois bobines séparées dans laquelle l'unité électronique (19) est une carte de circuit imprimé.

4. Radiotéléphone mobile (10) selon l'une quelconque des revendications 1 à 3,
**caractérisé en ce que**
la deuxième unité émettrice-réceptrice (18) est disposée sur un module externe (24) avec une première interface (26),
en particulier le radiotéléphone mobile (10) ayant une deuxième interface (28) qui est compatible avec la première interface (26).

5. Radiotéléphone portable (10) selon la revendication 4,
**caractérisé en ce que**
le module externe (24) peut être installé ultérieurement pour le radiotéléphone mobile (10),
en particulier que la deuxième interface (28) possède un système de bus,
en particulier un bus série universel (USB).

6. Radiotéléphone portable (10) selon l'une des revendications précédentes,
**caractérisé en ce que**
le code d'autorisation (21) est modulé sur le second signal radio (22) par un procédé de modulation .

7. Procédé de commande à distance d'au moins une fonction d'un dispositif de sécurité (12) d'un véhicule automobile (11) comportant un radiotéléphone mobile (10),
le radiotéléphone mobile (10) ayant une première unité émettrice-réceptrice (14) pour établir une connexion avec un réseau radio mobile (16),
**caractérisé en ce que**
le radiotéléphone mobile (10) comporte une deuxième unité émettrice-réceptrice (18), dans lequel un premier signal radio (20) est reçu,
le radiotéléphone mobile (10) étant commuté en mode actif par le premier signal radio reçu et, dans le mode actif commuté, un deuxième signal radio (22) ayant un code d'autorisation (21) pour commander la fonction du dispositif de sécurité (12) étant transmis par la deuxième unité émetteur-récepteur (18),
ladite deuxième unité émettrice-réceptrice (18) comprenant au moins une bobine,
la bobine étant disposée sur une unité électronique (19).

8. Procédure selon la revendication 7,
**caractérisé en ce que**
le premier signal radio (20) présente une caractéristique d'identification de véhicule,
en particulier dispose d'une fonction d'identification cryptée des véhicules.

9. Procédure selon la revendication 7 ou 8,
**caractérisé en ce que**
le code d'autorisation (21) est transmis sous forme cryptée.

10. Méthode selon l'une quelconque des revendications 7 à 9,
**caractérisé en ce que**
le code d'autorisation (21) est transmis au radiotéléphone mobile (10) via un réseau radio mobile (16),
en particulier est transmis sous forme cryptée.

11. Méthode selon l'une quelconque des revendications 7 à 10,
**caractérisé en ce que**
le code d'autorisation (21) est transmis via une interface radio,
en particulier via Bluetooth vers le radiotéléphone mobile.

12. Méthode selon l'une quelconque des revendications 7 à 11,
**caractérisé en ce que**
le radiotéléphone mobile (10) envoie une demande à un fournisseur pour transmettre un code d'autorisation (21) depuis Internet.

13. Système (1) de commande à distance d'au moins une fonction d'un dispositif de sécurité (12) d'un véhicule (11) avec un radiotéléphone mobile (10),
dans laquelle le véhicule (11) comporte au moins un capteur (50) et un événement peut être enregistré par le capteur (50),
dans laquelle un premier signal radio (20) peut être transmis par une unité émettrice-réceptrice côté véhicule (52) lors de l'enregistrement de l'événement,
le premier signal radio (20) étant reçu par le radiotéléphone mobile (10) par une deuxième unité émettrice/réceptrice (18) et
le radiotéléphone mobile (10) peut être commuté en mode actif lorsque le premier signal radio (20) est reçu, puis un deuxième signal radio (22) avec un code d'autorisation (21) peut être transmis par la deuxième unité émettrice/réceptrice (18) et
le deuxième signal radio (22) est reçu par l'unité émettrice-réceptrice côté véhicule (52), dans laquelle une évaluation peut être effectuée par une unité informatique côté véhicule (54) de telle sorte que la fonction du dispositif de sécurité (12) est activée si le code d'autorisation (21) est évalué positivement,
dans laquelle le capteur (50) est un capteur de proximité capacitif et/ou un système optique et/ou un système radar.

14. Système (1) selon la revendication 13,
**caractérisé en ce que**
le radiotéléphone mobile (10) est configuré avec les caractéristiques d'un radiotéléphone mobile (10) selon l'une des revendications 1 à 6
et/ou
le système est configuré pour faire fonctionner la procédure selon l'une des revendications 7 à 12.
